# NOUVEAU FASCICULE DE BREVET EUROPEEN

(11) **EP 0 328 590 B2**
(45) Date de publication et mention de la décision concernant l'opposition: **24.04.1996**
(45) Mention de la délivrance du brevet: 09.10.1991
(21) Numéro de dépôt: 88907014.0
(22) Date de dépôt: 28.07.1988
(51) Int. Cl.: A47J 43/046

(54) **CUVE AUXILIAIRE DE TRAVAIL POUR ROBOT DE CUISINE**
ZUSATZBEHÄLTER FÜR KÜCHENMASCHINEN
AUXILIARY WORK BOWL FOR KITCHEN MIXER

(30) Priorité: 29.07.1987 FR 8710725
(43) Date de publication de la demande: 23.08.1989
(73) Titulaire: ROBOT-COUPE S.A., F-71303 Montceau-les-Mines (FR)
(72) Inventeur: GATEAUD, André, F-71420 Perrecy-les-Forges (FR)
(74) Mandataire: Viard, Jean
(86) Numéro de dépôt international: FR8800390
(87) Numéro de publication internationale: WO8900827

(56) Documents cités:
- FR-A- 2 147 361
- FR-A- 2 545 712
- GB-A- 2 135 569
- GB-A- 2 167 312
- US-A- 4 194 697

## Description

La présente invention a pour objet une cuve auxiliaire de travail amovible pouvant être monté à l'intérieur d'une cuve principale pour un robot de cuisine.

De tels appareils sont bien connus, notamment par le brevet FR-A-2 147 361 (VERDUN). Ils comprennent, d'une manière générale, un socle à l'intérieur duquel est monté un moteur électrique dont l'arbre émerge du socle verticalement, différents outils pouvant être montés sur ledit arbre à l'intérieur d'une cuve fixée sur le socle d'une manière amovible et portant à sa partie supérieure des moyens de verrouillage pour un couvercle.

Etant donné les conditions d'utilisation, des moyens de sécurité sont prévus dans le socle. Ces moyens de sécurité sont validés soit par l'intermédiaire d'une tige-poussoir, soit encore par une patte faisant saillie radialement à l'extérieur du couvercle en fonction de la structure du socle.

Le volume interne des cuves de robots est généralement tel qu'il corresponde à la quantité d'ingrédients nécessaires pour la préparation d'un plat destiné à alimenter une famille de plusieurs personnes. C'est ainsi que la capacité des cuves connues est de l'ordre de 1 à 2,5 litres. Mais, cette capacité satisfaisante pour des usages normaux, ne l'est plus lorsq'il s'agit de réaliser des préparations de faible volume et par exemple, des sauces ou analogues. Pour ces petites préparations, il est alors nécessaire de faire appel à un autre appareil.

On a déjà proposé de disposer à l'intérieur d'une cuve de robot de cuisine un récipient auxiliaire, notamment dans FR-A-2 545 712, US-A-4,194,697 et dans GB-A-2 135 569. US-A-4,194,697 propose d'éviter une détérioration de l'axe d'entraînement ou du moteur par pénétration des aliments. A cet effet, une cuve auxiliaire fait office de chemisage intérieur aussi bien de la cuve principale que de l'axe d'entraînement. Par GB-A-2 135 569, est connu un dispositif du type décrit dans le préambule de la revendication 1. Dans ce dernier document, la cuve auxiliaire est disposée au centre de l'appareil, eu-dessous d'une goulotte centrale d'introduction des produits. Elle est fermée par un couvercle indépendant, ce qui interdit l'introduction d'ingrédients lorsque l'appareil est en marche. Or, cette introduction est nécessaire dans certaines préparations.

La présente invention a pour objet de remédier à cet inconvénient en permettant de travailler de petites quantités de produits à l'intérieur d'une cuve relativement grande. Le but est atteint par l'objet de la revendication 1.

Il est ainsi possible de ne travailler que dans la partie haute de la cuve principale, à l'aide d'une ou de plusieurs cuves auxiliaires dont le diamètre peut être variable, mais dont la distance entre le centre du fond de la cuve et le bord supérieur de cele-ci reste constante, ce qui permet l'emploi de telles cuves auxiliaires, dont le fond peut ne pas être plat, sur une gamme complète d'appareils de dimensions différentes.

Selon une autre caractéristique de l'invention, dans le cas où le couvercle présente une goulotte d'introduction des denrées, la cuve auxiliaire est caractérisée en ce qu'elle présente un rebord faisant saillie, solidarisant en rotation la cuve auxiliaire et le couvercle de la cuve principale.

D'autres caractéristiques et avantage de la présente invention apparaîtront au cours de la description qui va suivre d'un mode particulier de réalisation, donné uniquement à titre d'exemple non limitatif, en regard des dessins qui représentent :
- la figure 1, une vue en coupe verticale d'un robot de cuisine équipé d'une cuve auxiliaire selon l'invention;
- la figure 2, un autre mode de réalisation ;
- la figure 3, une vue par-dessus du robot sur lequel est montée une cuve auxiliaire ;
- la figure 4, une vue en coupe verticale de la cuve auxiliaire ;
- la figure 5, une vue par-dessus de la cuve auxiliaire;
- la figure 6, une vue de détail montrant l'extrêmité supérieure de la cheminée de la cuve principale;
- la figure 7, une vue par dessus de la cuve principale.

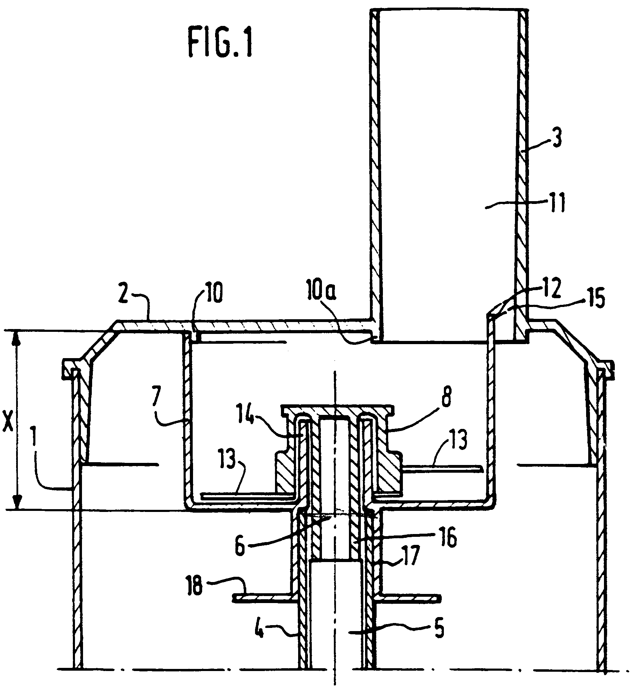

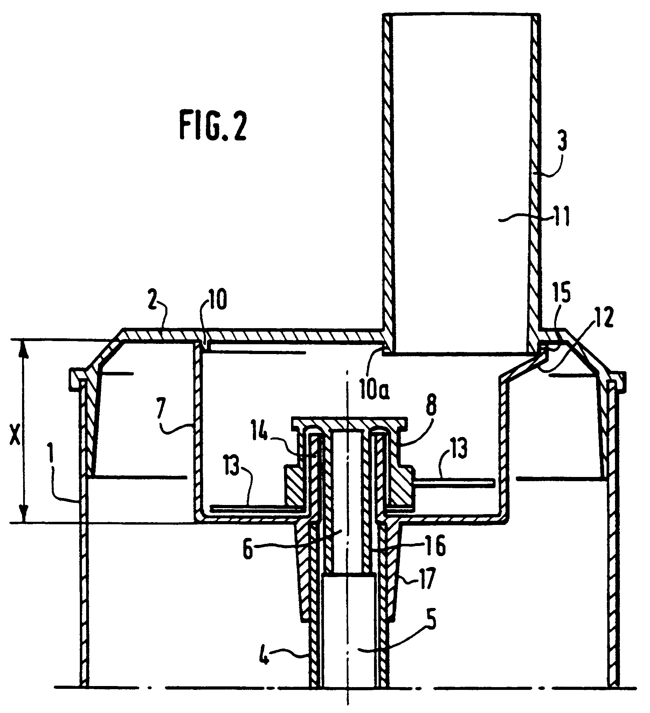

Sur la figure 1, on distingue la cuve principale 1 d'un robot de cuisine fermé par un couvercle 2. Dans l'exemple représenté, ce couvercle est muni d'une goulotte 3 d'introduction des produits. On distingue également sur cette figure, qui ne représente que la partie supérieure d'un robot, l'extrémité supérieure de la cheminée 4 entourant l'ouverture de passage de l'arbre moteur 5 et évitant que le liquide se trouvant dans la cuve ne vienne au contact dudit arbre moteur. C'est sur le dessus de la jupe 4 qu'est montée la cuve auxiliaire 7. Celle-ci présente une forme générale cylindrique et prend appui sur la cheminée 4 par l'intermédiaire d'une jupe 17 qui, de préférence, se termine à sa partie inférieure par un épanouissement 18 formant pied de pose. Comme précédemment, la cuve 7 présente une cheminée ou chicane 14 assurant l'étanchéité de l'arbre moteur. A l'intérieur de la cuve 7, a été représenté un outil 8 à deux lames de couteaux 13 en croissant, dont la convexité est tournée vers l'avant (voir figure 2). Le couteau 8 est muni d'un moyeu ou jupe 16 emmanché à friction sur l'extrémité 6 de l'arbre moteur 5, extrémité qui présente une section permettant d'entraîner l'outil 8 sans glissement.

Outre son appui sur l'extrémité supérieure de la cheminée 4, la cuve auxiliaire 7 prend également appui contre la surface inférieure du couvercle 2 sur une couronne ou jonc 10. Elle est ainsi maintenue par frottement à l'encontre des sollicitations en rotation qui pourraient provenir de l'entraînement de la matière traitée par la rotation de l'outil 8. Cet outil 8 permet de réaliser une coupe et une agitation du produit se trouvant dans la cuve 7. D'autres outils, tels que des batteurs à blancs d'oeuf, peuvent également être utilisés.

Le couvercle 2 est muni d'une goulotte ou trémie 3 définissant une ouverture 11 à l'intérieur de laquelle peuvent être introduits les produits à traiter au cours de l'opération de préparation.

Ces produits peuvent être acheminés en direction de l'outil par l'intermédiaire d'un poussoir (non représenté) coulissant à l'intérieur de la goulotte, ou introduits directement dans le cas de liquides. Dans le cas de l'utilisation de la minicuve 7, il est intéressant de pouvoir utiliser la goulotte en vue d'ajouter à des moments précis des ingrédients tels que de l'huile ou du vinaigre par exemple.

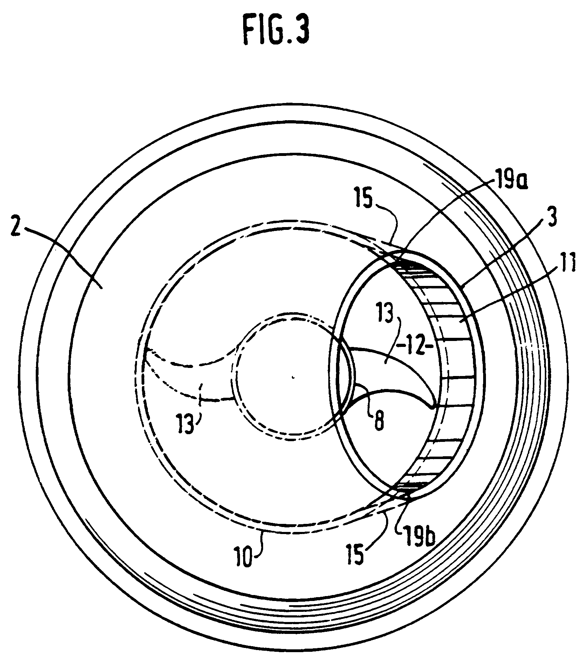

La cuve 7 est munie d'un rebord 12 qui est destiné à faire saillie à l'intérieur de la cavité 11 et à bloquer la cuve 7 aux points 19a et 19b, comme celà apparaît sur la figure 3. Ainsi, la cuve auxiliaire 7 est parfaitement immobilisée en rotation. Bien entendu, lors du montage du couvercle 2 sur la cuve 1, et au cours du mouvement de pivotement destiné à assurer le verrouillage du couvercle 2 sur la cuve 1, la cuve auxiliaire 7 est entraînée en rotation d'un même angle que le couvercle et, par exemple, de 90°.

De préférence, le rebord 12 est muni d'une collerette 15 (représentée en trait pointillé sur la figure 1), dont l'extrémité vient prendre appui contre la paroi intérieure de la goulotte 3. Ainsi, en cas d'adjonction de liquide, une étanchéité suffisante est assurée, de sorte qu'aucun produit ne tombe dans la cuve principale 1.

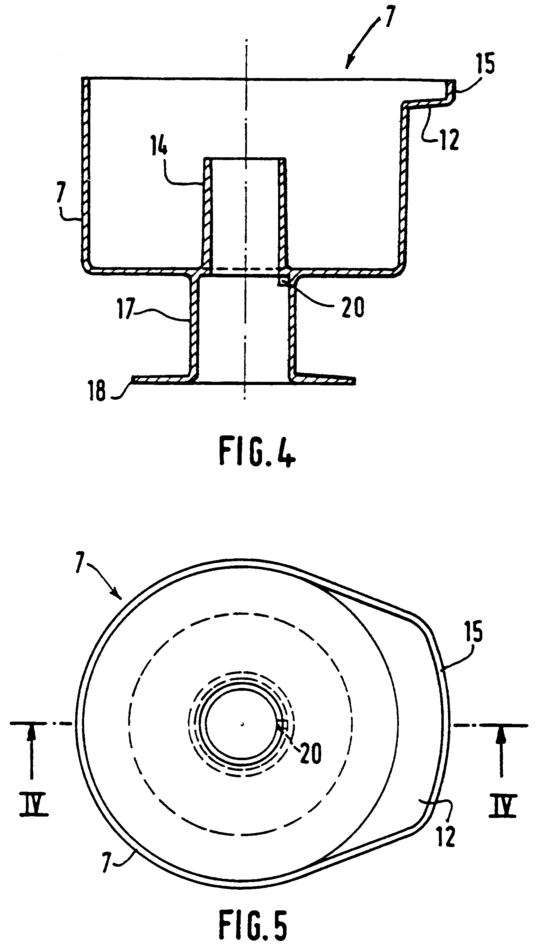

La figure 2 représente un second mode de réalisation qui ne diffère du précédent qu'en ce que la cuve auxiliaire ou minicuve (représentée sur les figures 4 et 5) présente un bord incliné 12 faisant saillie à partir de la minicuve, venant au-dessous de la goulotte 3. Le bord 12 présente un rebord 15, rabattu vers le haut, qui entoure la lèvre 10a (en saillie au-dessous du couvercle 2) de la goulotte 3 sur la partie extérieure de celle-ci. Ainsi, si des produits sont introduits par la goulotte 3 au cours d'une préparation, ils glissent tout naturellement à l'intérieur de la minicuve 7, sans risquer de passer dans la cuve principale.

La figure 3 est une vue par-dessus montrant les positions respectives de la goulotte 3 et de la minicuve, le bord inférieur 10a, extérieur de la goulotte, étant entouré par le rebord 15 dans ce mode de réalisation. Comme précédemment, le bord supérieur de la minicuve vient s'appliquer contre le jonc 10 du couvercle 2 pour assurer une bonne étanchéité.

Mais, bien entendu, étant donné que la cuve auxiliaire n'est pas à symétrie de révolution, en raison du bord 12 et du rebord 15, il est nécessaire qu'il existe un positionnement précis entre la cuve 7 et la goulotte 3. Cette mise en position sera expliquée en regard des figures 5, 6 et 7.

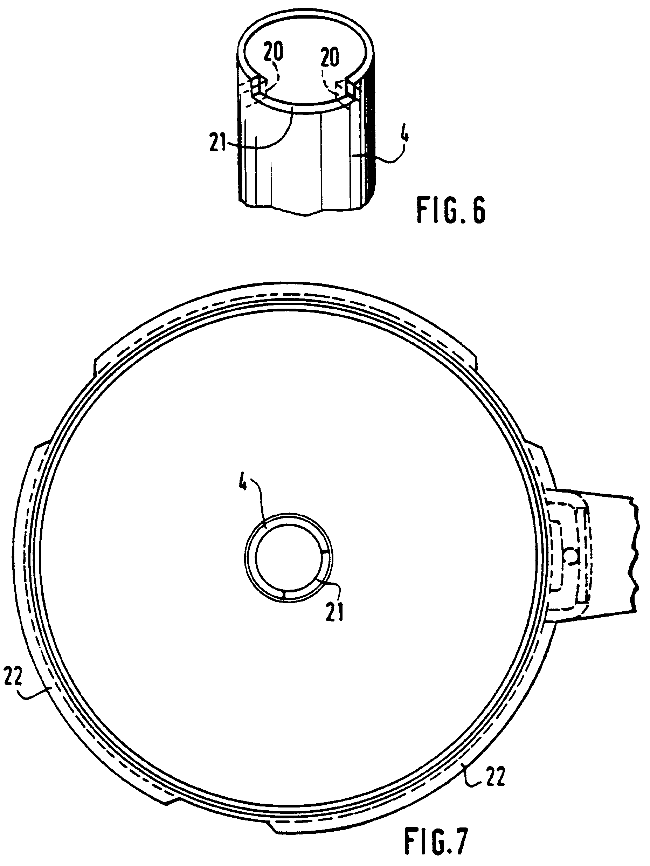

Sur la figure 6, on voit que l'extrêmité supérieure de la cheminée 4 présente une encoche 21. Dans cette encoche, est mobile, avec la minicuve 7, un téton 20 (qui apparaît sur les figures 4 et 5) qui peut venir en butée, soit du côté gauche, soit du côté droit de l'encoche 21. Ces deux positions correspondent, d'une part à la position de montage et, d'autre part, à la position de verrouillage qui est également la position de travail. La position de montage correspond à des encoches formées dans le rebord 22 de la cuve 2, encoches qui permettent le passage du couvercle 2, avant son verrouillage sur la cuve 1, verrouillage qui est obtenu par une rotation de 90° par exemple. C'est, en particulier, ce verrouillage qui permet la mise en rotation du moteur. Dans la position de montage (position dans laquelle on pose les différents éléments à l'intérieur de la cuve), lorsque le téton 20 est en butée contre la surface gauche de l'encoche 21, la pose du couvercle 2 assure un positionnement convenable de la goulotte par rapport à la cuve auxiliaire et l'entourage de la goulotte par le rebord 15 de la cuve 7. Lors du verrouillage du couvercle, la cuve auxiliaire est entraînée et tourne avec la goulotte.

Il est également possible de prévoir une pente sur l'encoche 21, de sorte que la minicuve posée sur la cheminée 4 prenne, par gravité, la position de montage désirée. Par raison de symétrie, deux encoches 21 peuvent être formées dans le haut de la cheminée 4, ces encoches formant des rampes qui assurent, d'une part un positionnement automatique, et d'autre part, la montée de la cuve auxiliaire lors du verrouillage du couvercle. La rotation ultérieure du couvercle surélève la minicuve, ce qui assure un contact contrôlé entre le bord supérieur de la cuve 7 et la surface inférieure du couvercle 2 sur le jonc 10.

Il est possible d'utiliser sur un même appareil, et même sur toute une gamme d'appareils, un ensemble de cuves auxiliaires 7 de diamètres différents, la cote X indiquant la différence de niveau entre le centre du fond de la cuve 7 et son bord supérieur restant constante.

Il va de soi que de nombreuses variantes peuvent être introduites notamment par substitution de moyens techniquement équivalents sans pour autant sortir du cadre de l'invention tel que défini par les revendications.

## Revendications

1. Cuve auxiliaire de travail amovible (7) et cuve principale (1), à l'intérieur de laquelle elle est disposée, destinées à un robot de cuisine comprenant un socle à l'intérieur duquel est monté un moteur électrique entraînant un arbre moteur (5) faisant saillie verticalement à partir du socle, différents outils (8) pouvant être montés sur l'arbre moteur (5), à l'intérieur de ladite cuve principale cylindrique (1) fixée d'une manière amovible sur le socle, ladite cuve principale (1) étant munie d'une cheminée centrale (4) destinée à entourer l'arbre moteur (5) et d'un couvercle verrouillable (2) sur la cuve principale (1), ledit couvercle (2) présentant une goulotte d'introduction (3), le diamètre de la cuve auxiliaire (7) étant inférieur au diamètre de la cuve principale (1), la cuve auxiliaire (7) comprenant une paroi latérale et un fond, ledit fond reposant sur l'extrémité de la cheminée (4) et présentant une jupe de fixation (17) sur ladite cheminée (4) et une cheminée (14) destinée à entourer l'ouverture de passage de l'arbre moteur (5), caractérisée en ce que la distance (X) au droit de la cheminée (4) entre le centre du fond de la cuve auxiliaire (7) et le bord supérieur de celle-ci est égale à la distance séparant le haut de la cheminée (4) de la paroi inférieure du couvercle (2) et en ce que la goulotte d'introduction (3) est au-dessus de la cuve auxiliaire (7) et excentrée par rapport audit couvercle (2).

2. Cuve auxiliaire de travail amovible (7) et cuve principale (1) selon la revendication 1, caractérisée en ce qu'elle est munie d'un rebord (12) pénétrant à l'intérieur de l'ouverture (11) de la goulotte (3) pour assurer son immobilisation lors de l'entraînement en rotation de l'outil (8) et l'étanchéité de la liaison goulotte-cuve auxiliaire.

3. Cuve auxiliaire de travail amovible (7) et cuve principale (1) selon la revendication 2, caractérisée en ce que le rebord (12) se prolonge vers la paroi de la goulotte par une collerette (15) d'étanchéité.

4. Cuve auxiliaire de travail amovible (7), et cuve principale (1) selon la revendication 1, caractérisée en ce que, elle présente un bord (12) en saillie, se terminant par un rebord (15), le rebord (15) venant, après montage, entourer l'extrémité inférieure (10a) de la goulotte (3), le bord (12) venant au-dessous de la goulotte (3).

5. Cuve auxiliaire de travail amovible (7) et cuve principale (1) selon l'une quelconque des revendications précédentes, caractérisée en ce que son bord supérieur prend appui contre la paroi inférieure du couvercle (2) contre une couronne (10) d'étanchéité.

6. Cuve auxiliaire de travail amovible (7) et cuve principale (1) selon l'une quelconque des revendications précédentes, caractérisée en ce que la cheminée (4) de la cuve principale (1) présente une encoche (21), dont les côtés forment des butées pour au moins un téton (20) de la cuve (7), correspondant respectivement à la position de montage et à la position de verrouillage, tant de la cuve (7), que du couvercle (2).

7. Cuve auxiliaire de travail amovible (7) et cuve principale (1) selon la revendication 6, caractérisée en ce que l'encoche (21) de la cheminée (4) est inclinée par rapport à l'horizontale, de sorte que la cuve (7) se positionne automatiquement, lors de son montage, en alignement avec la goulotte (3).

8. Cuve auxiliaire de travail amovible (7) et cuve principale (1) selon l'une quelconque des revendications précédentes, caractérisée en ce que la jupe (7) présente, à sa partie inférieure, un épanouissement (18) formant pied de pose.

## Claims

1. An auxiliary working bowl (7) and a main bowl (1) the auxiliary bowl being mounted inside the main bowl, for a food processor comprising a base having an electric motor housed therein and driving a drive shaft (5) which projects vertically from the base with various different tools (8) being mountable on the drive shaft inside the cylindrical main bowl (1) this main bowl being removably mounted on the base and provided with a central sleeve surrounding the drive shaft (5) and a lid (2) for closing the main bowl (1), said lid having an insertion hopper (3), the diameter of the auxiliary working bowl (7) being less than the diameter of the main bowl (1), said auxiliary bowl (7) comprising a side wall and a bottom wall said bottom wall lying on the upper surface of the sleeve (4) and having a skirt (17) for fixing to the sleeve and a sleeve (14) surrounding the opening through which the drive shaft passes characterized in that the distance (X) between the center of the bottom wall of the auxiliary bowl and the upper edge of this one in alignment with the sleeve (4) is equal to the distance between the top of the sleeve (4) and the bottom wall of the lid (2) and in that the insertion hopper is above the auxiliary bowl and excentric relative to the lid (2).

2. An auxiliary working bowl and a main bowl according to claim 1, characterized in that it is provided with a rim (12) penetrating into the opening (11) of the hopper (3) in order to prevent the bowl from moving when the tool (8) is rotated and in order to seal the connection between the hopper and the auxiliary bowl.

3. An auxiliary working bowl and main bowl according to claim 2, characterized in that the rim (12) has a sealing collar (15) extending it towards the wall of the hopper.

4. An auxiliary working bowl and a main bowl according to claim 1, characterized in that it has a projecting edge (12) terminated by a rim (15), the rim (15) surrounding, after assembly, the bottom end (10a) of the hopper (3), with the edge (12) coming beneath the hopper (3).

5. An auxiliary working bowl and a main bowl according to any preceding claim, characterized in that its top edge bears against the bottom wall of the lid (2) via a sealing ring (10).

6. An auxiliary working bowl and a main bowl according to any preceding claim, characterized in that he sleeve (4) of the main bowl (1) has a notch (21) whose sides form abutments for at least one peg (20) on the auxiliary bowl (7) said abutments corresponding respectively to an assembly position and to a locking position, both for the auxiliary bowl (7) and for the lid (2).

7. An auxiliary working bowl and a main bowl according to claim 6, characterized in that the notch (21) of the sleeve (4) is inclined relative to the horizontal such that the auxiliary bowl (7) is positioned automatically, during assembly, to come into alignment with the hopper (3).

8. An auxiliary working bowl and a main bowl according to any preceding claim, characterized in that the skirt (17) terminates in a larger-diameter bottom portion (18) constituting a stand.

## Patentansprüche

1. Abnehmbare Hilfsarbeitsschüssel (7) und Hauptschüssel (1), in deren Inneren sie angeordnet ist, für eine Küchenmaschine mit einem Sockel, in dem ein Elektromotor angeordnet ist, der eine Motorwelle (5) antreibt, die vertikal vom Sockel aus nach oben ragt und auf der verschiedene Werkzeuge (8) im Inneren der zylindrischen Hauptschüssel (1) montiert werden können, die abnehmbar am Sockel befestigt ist, wobei diese Hauptschüssel (1) mit einem zentralen Schacht (4) versehen ist, der die Motorwelle (5) umgibt, sowie mit einem Deckel (2), der verriegelbar auf der Hauptschüssel (1) sitzt und eine Einführrutsche (3) aufweist, wobei der Durchmesser der Hilfsschüssel (7) kleiner ist als der Durchmesser der Hauptschüssel (1) und die Hilfsschüssel (7) eine Seitenwand und einen Boden besitzt, der eine Schürze (17) zur Befestigung auf dem Schacht (4) und einen Schacht (14) aufweist, der die Öffnung zur Durchführung der Motorwelle (5) umgibt, dadurch gekennzeichnet, daß der Abstand (X) zwischen der Mitte des Bodens der Hilfsschüssel (7) und deren oberen Rand dem Abstand zwischen der Oberkante des Schachtes (4) und der unteren Wand des Deckels (2) entspricht, und dadurch, daß die Einführrutsche (3) exzentrisch am Deckel angeordnet ist.

2. Abnehmbare Hilfsschüssel und Hauptschüssel nach Anspruch 1, dadurch gekennzeichnet, daß sie mit einer Einfassung (12) versehen ist, die in das Innere der Öffnung (11) der Einführrutsche (3) hereingreift, um ihre Lagesicherung gegen eine Mitnahme in Drehrichtung des Werkzeuges (8) und die Dichtheit der Verbindung zwischen Einführrutsche und Hilfsschüssel zu bewirken.

3. Abnehmbare Hilfsschüssel und Hauptschüssel nach Anspruch 2, dadurch gekennzeichnet, daß sich die Einfassung (12) mit einem Dichtkragen (15) zu der Wand der Einführrutsche (3) hin verlängert.

4. Abnehmbare Hilfsschüssel und Hauptschüssel nach Anspruch 1, dadurch gekennzeichnet, daß sie einen vorstehenden Rand (12) besitzt, der in einem Rand (15) endet und daß der Rand (15) nach der Montage das untere Ende (10a) der Einführrutsche (3) umgibt, wobei der Rand (12) unterhalb der Einführrutsche (3) bleibt.

5. Abnehmbare Hilfsschüssel und Hauptschüssel nach einem der vorhergehenden Ansprüche, dadurch gekennzeichnet, daß ihr oberer Rand sich an die untere Wand des Deckels (2) und an einen Dichtring (10) anlegt.

6. Abnehmbare Hilfsschüssel und Hauptschüssel nach einem der vorhergehenden Ansprüche, dadurch gekennzeichnet, daß der Schacht (4) der Hauptschüssel (1) eine Ausnehmung (21) aufweist, deren Seiten Anschläge für mindestens einen Ansatz (20) der Schüssel (7) bilden, wobei die Ausnehmung der Montagestellung und der Verriegelungsstellung sowohl der Schüssel (7) als auch des Deckels (2) angepaßt ist.

7. Abnehmbare Hilfsschüssel und Hauptschüssel nach Anspruch 6, dadurch gekennzeichnet, daß die Ausnehmung (21) des Schachtes (4) zur Horizontalen so geneigt ist, daß sich die Schüssel (7) bei ihrer Montage automatisch zu der Einführrutsche (3) ausrichtet.

8. Abnehmbare Hilfsschüssel und Hauptschüssel nach einem der vorhergehenden Ansprüche, dadurch gekennzeichnet, daß die Schürze (17) an ihrem unteren Teil eine Aufweitung (18) besitzt, die einen Aufstellfuß bildet.
